# EUROPÄISCHE PATENTSCHRIFT

(11) **EP 2 300 368 B1**
(45) Veröffentlichungstag und Bekanntmachung des Hinweises auf die Patenterteilung: **08.10.2014**
(21) Anmeldenummer: 09753541.3
(22) Anmeldetag: 27.05.2009
(51) Int. Cl.: C01B 33/03, C01B 33/037

(54) **HALOGENIDHALTIGES SILICIUM, VERFAHREN ZUR HERSTELLUNG DESSELBEN UND VERWENDUNG DESSELBEN**
SILICON CONTAINING HALOGENIDE, METHOD FOR PRODUCING THE SAME, AND USE OF THE SAME
SILICIUM À BASE D'HALOGÉNURE, PROCÉDÉ POUR LE PRODUIRE ET UTILISATION DUDIT SILICIUM

(30) Priorität: 27.05.2008 DE 102008025263; 27.05.2008 DE 102008025264
(43) Veröffentlichungstag der Anmeldung: 30.03.2011
(73) Patentinhaber: Spawnt Private S.à.r.l., 1148 Luxembourg (LU)
(72) Erfinder: MOHSSENI-ALA, Seyed-Javad, 06766 Bitterfeld-Wolfen (DE); BAUCH, Christian, 06766 Bitterfeld-Wolfen (DE); GEBEL, Thoralf, 01465 Dresden-Langebrück (DE); DELTSCHEW, Rumen, 04319 Leipzig (DE); LIPPOLD, Gerd, 04179 Leipzig (DE); AUNER, Norbert, 61479 Glashütten (DE)
(74) Vertreter: Epping, Wilhelm
(86) Internationale Anmeldenummer: PCT/DE2009/000728
(87) Internationale Veröffentlichungsnummer: WO 2009/143825

(56) Entgegenhaltungen:
- EP-A- 0 264 045
- EP-A- 0 264 722
- EP-A- 0 699 625
- GB-A- 2 079 736

## Beschreibung

Die vorliegende Erfindung betrifft durch thermische Zersetzung von halogeniertem Polysilan erhaltenes Silicium, insbesondere durch thermische Zersetzung von chloriertem Polysilan erhaltenes Silicium.

Aus der WO 2006/125425 A1 ist ein Verfahren zur Herstellung von Silicium aus Halogensilanen bekannt, bei dem in einem ersten Schritt das Halogensilan unter Erzeugung einer Plasmaentladung zu einem halogenierten Polysilan umgesetzt wird, das nachfolgend in einem zweiten Schritt unter Erhitzen zu Silicium zersetzt wird. Zur Zersetzung des halogenierten Polysilans wird dieses vorzugsweise auf eine Temperatur von 400 °C bis 1.500 °C erhitzt. In den Ausführungsbeispielen finden Temperaturen von 800 °C, 700 °C, 900 °C und wiederum 800 °C Verwendung. Was den eingesetzten Druck anbetrifft, so wird vorzugsweise bei vermindertem Druck gearbeitet, wobei in den Ausführungsbeispielen unter Vakuum gearbeitet wird.

Es versteht sich, dass man mit dem vorstehend beschriebenen Verfahren die Herstellung von möglichst reinem Silicium anstrebt. Insbesondere weist das erhaltene Silicium einen geringen Halogenidgehalt auf.

Der vorliegenden Erfindung liegt die Aufgabe zugrunde, eine durch thermische Zersetzung von halogeniertem Polysilan erhaltene Siliciumvariante zur Verfügung zu stellen, die insbesondere für Aufreinigungszwecke von Silicium eingesetzt werden kann. Ferner soll ein Verfahren zur Herstellung einer derartigen Siliciumvariante zur Verfügung gestellt werden.

Die vorstehend genannte Aufgabe wird erfindungsgemäß mit einem durch thermische Zersetzung von halogeniertem Polysilan erhaltenes halogenidhaltiges Silicium mit einem Halogenidgehalt von 1 at%-50 at% gelöst.

Es wurde erfindungsgemäß festgestellt, dass die bei dem eingangs beschriebenen bekannten Verfahren zur Herstellung von Silicium eingesetzten hohen Temperaturen und niedrigen Drücke für die hohe Reinheit des erhaltenen Endproduktes ursächlich sind, insbesondere in Bezug auf den Halogenidgehalt des Endproduktes. Erfindungsgemäß wird nunmehr nicht die Herstellung von Silicium mit einem möglichst geringen Halogenidgehalt angestrebt, sondern das Silicium soll gezielt einen relativ hohen Halogenidgehalt von 1 at%-50 at% aufweisen. Dieses Silicium mit relativ hohem Halogenidgehalt wird durch relativ niedrige Temperaturen und relativ hohe Drücke bei der thermischen Zersetzung (Pyrolyse) möglich gemacht.

Das durch thermische Zersetzung von halogeniertem Polysilan erhaltene Silicium fällt vorzugsweise direkt in granularer Form an. Es besitzt vorzugsweise eine Schüttdichte von 0,2-1,5 g/cm³, weiterhin vorzugsweise eine Korngröße von 50-20.000 µm.

Es wurde festgestellt, dass der Halogenidgehalt von der Korngröße abhängig ist. Mit wachsender Korngröße steigt der Halogenidgehalt.

Der Halogenidgehalt kann durch Titration mit Silbernitrat (nach Moor) quantitativ bestimmt werden. IR-spektroskopische Messungen (ATR-Technik, Diamant Einfachreflexion) an chloridhaltigem Silicium zeigen ein Signal bei 1029 cm⁻¹. Die Stärke ist abhängig vom Halogenidgehalt und nimmt bei steigendem Halogenidgehalt zu.

Während daher bei dem eingangs aufgezeigten Stand der Technik die Verfahrensbedingungen (Pyrolysebedingungen) so ausgewählt werden, dass möglichst reines Silicium erhalten wird, weist das erfindungsgemäße Silicium gezielt einen relativ hohen Halogenidgehalt auf.

Was den Halogenidgehalt des Siliciums anbetrifft, so weist dieses beispielsweise in den Leerräumen von halogenhaltigen Siliciumkörnern Halogensilane (SiₙX₂ₙ₊₂ (X = Halogen)) auf. Diese können im physikalischen Gemisch mit den Siliciumkörnern vorliegen. Das Silicium kann aber auch chemisch fest an Si-Atome gebundenes Halogen aufweisen, wobei das erfindungsgemäße Silicium normalerweise beide Varianten enthält.

Die Farbe des erfindungsgemäßen Siliciums ist abhängig vom Halogenidgehalt (Chloridgehalt). Beispielsweise ist ein Silicium mit einem Chloridgehalt von 30 at% rotbraun, während ein Silicium mit einem Chloridgehalt von 5 at% schwarzgrau ist.

Die vorliegende Erfindung betrifft ferner ein Verfahren zur Herstellung des erfindungsgemäßen halogenidhaltigen Siliciums, bei dem das halogenierte Polysilan unter kontinuierlicher Zugabe in einem Reaktor thermisch zersetzt wird und halogenidhaltiges Silicium mit einem Halogengehalt von 1 at%-50 at% erhalten wird. Vorzugsweise wird dabei das halogenierte Polysilan in den Reaktor eingetropft. Durch diese kontinuierliche Vorgehensweise wird der erfindungsgemäß gewünschte relativ hohe Halogenidgehalt erzielt.

Die thermische Zersetzung findet dabei vorzugsweise in einem Temperaturbereich von 350 °C-1.200 °C statt, wobei die Temperatur zur Zersetzung des halogenierten Polysilans bevorzugt weniger als 400 °C beträgt.

Ferner wird die thermische Zersetzung vorzugsweise bei einem Druck von 10⁻³ mbar bis 300 mbar über Atmosphärendruck durchgeführt, wobei Drücke > 100 mbar bevorzugt werden.

Bei einer Variante des erfindungsgemäßen Verfahrens wird im für die thermische Zersetzung verwendeten Reaktor eine Inertgasatmosphäre, insbesondere Argonatmosphäre, aufrechterhalten.

Die Einstellung des gewünschten Halogenidgehaltes ist durch Variation einer Reihe von Parametern möglich, beispielsweise Einstellen eines gewünschten Zeitprofils, Temperaturprofils und Druckprofils. Wie bereits erwähnt, wird bei dem erfindungsgemäßen Verfahren das halogenidhaltige Silicium vorzugsweise direkt in granularer Form gewonnen. Dies schließt natürlich nicht aus, dass das gewonnene Endprodukt durch weitere mechanische Maßnahmen, wie mechanisches Zerkleinern, Sieben etc., entsprechend modifiziert werden kann, um gewünschte Stoffeigenschaften in bestimmten Bereichen zu erzielen.

Eine weitere Verfahrensvariante zur Einstellung des Halogenidgehaltes des erhaltenen granularen Siliciums betrifft eine Nachbehandlung des erhaltenen Siliciums. Beispielsweise lässt sich der Halogenidgehalt durch Ausheizen reduzieren. So wurde zum Beispiel der Chloridgehalt einer bestimmten Siliciumsorte (Korngröße 50 µm bis 20.000 µm, Chloridgehalt 15 %) durch Ausheizen auf 1.150 °C über vier Stunden bis auf 4 % reduziert. Als geeignete Nachbehandlung seien beispielsweise Ausheizen, Ausheizen unter Vakuum, Zerkleinern oder Sieben erwähnt.

Die vorliegende Erfindung betrifft ferner die Verwendung des halogenidhaltigen Siliciums zum Aufreinigen von metallurgischem Silicium.

Aus der US 4 312 849 ist ein Verfahren zum Entfernen von Phosphorverunreinigungen in einem Verfahren zum Aufreinigen von Silicium bekannt, bei dem eine Siliciumschmelze hergestellt und die Schmelze mit einer Chlorquelle behandelt wird, um Phosphor zu entfernen. Als bevorzugte Chlorquelle wird eine gasförmige Chlorquelle verwendet, insbesondere Cl₂. Als andere Chlorquellen werden COCl₂ und CCl₄ angegeben. Der Schmelze wird zusätzlich Aluminium zugesetzt. Das die Chlorquelle enthaltende Gas wird durch die Schmelze geblasen.

Aus der DE 29 29 089 A1 ist ein Verfahren zur Veredelung und Züchtung von Siliciumkristallen bekannt, bei dem man ein Gas mit einer Siliciumschmelze reagieren lässt, wobei das Gas aus der Gruppe ausgewählt ist, die nassen Wasserstoff, Chlorgas, Sauerstoff und Chlorwasserstoff umfasst.

Die EP 0 007 063 A1 beschreibt ein Verfahren zur Herstellung von polykristallinem Silicium, bei dem ein Gemisch aus Kohlenstoff und Silicium zur Ausbildung einer Schmelze erhitzt und ein Chlor und Sauerstoff enthaltendes Gas durch die Schmelze geleitet wird.

Wie die vorstehenden Ausführungen zeigen, ist es bereits bekannt, Verunreinigungen aus Siliciumschmelzen mit Hilfe von gasförmigen Chlorquellen zu entfernen. Dabei werden Chlorgas oder Chlor enthaltende Gasgemische in die Si-Schmelze eingeleitet. Die Umsetzung einer derartigen Technologie ist jedoch sehr komplex, da die Einleitung des Chlors direkt in die Schmelze erfolgen muss, was in der Regel durch Röhrchen oder spezielle Düsen geschieht. Eine homogene Verteilung des Chlors über die gesamte Schmelze ist damit nur bedingt möglich. Zudem kann durch die Vorrichtungen zur Einleitung des Chlors in die Schmelze die Schmelze selbst beeinträchtigt werden, d.h. es kann beispielsweise zu Verunreinigungen kommen, die aus den Vorrichtungen zur Gaseinleitung herrühren.

Es wurde nunmehr gefunden, dass sich das erfindungsgemäße halogenidhaltige Silicium ausgezeichnet zum Aufreinigen von metallurgischem Silicium eignet, und zwar auf besonders einfache und effektive Weise. Dabei wird bei einer ersten Variante mit den folgenden Schritten vorgegangen:
Vermischen von halogenidhaltigem Silicium mit dem zu reinigenden metallurgischem Silicium;
Schmelzen der Mischung und dadurch Aussublimieren der Verunreinigungen und Entfernen derselben aus der Schmelze in der Form von Metallhalogeniden.

Es findet somit keine gasförmige Chlorquelle zum Aufreinigen des metallurgischen Siliciums Verwendung, wie dies beim Stand der Technik der Fall ist, sondern es wird festes halogenidhaltiges Silicium mit dem zu reinigenden metallurgischen Silicium vermischt, und das resultierende Gemisch wird aufgeschmolzen. Dadurch werden die Verunreinigungen, insbesondere Schwermetalle in der Form von Chloriden, beispielsweise FeCl₃, aussublimiert und damit aus der Schmelze entfernt.

Bei einer zweiten Variante der erfindungsgemäßen Verwendung wird mit den folgenden Schritten vorgegangen:
Aufschmelzen des zu reinigenden metallurgischen Siliciums;
Einführen von halogenidhaltigem Silicium in die Schmelze und dadurch Aussublimieren der Verunreinigungen und Entfernen derselben aus der Schmelze in der Form von Metallhalogeniden.

Bei dieser zweiten Verfahrensvariante findet daher kein vorheriges Mischen des halogenidhaltigen Siliciums mit dem zu reinigenden metallurgischen Silicium statt, sondern das halogenidhaltige Silicium wird direkt in eine Schmelze aus dem zu reinigenden metallurgischen Silicium eingeführt. Auch hierdurch werden Verunreinigungen des zu reinigenden Siliciums aussublimiert und von der Schmelze in der Form von Metallhalogeniden entfernt.

Als halogenidhaltiges Silicium wird hierbei vorzugsweise chloridhaltiges Silicium verwendet.

Als halogenidhaltiges Silicium kann vorzugsweise ein solches verwendet werden, das im Gemisch mit Si-Anteilen Halogensilan-Anteile enthält. Derartige Halogensilane (SiₙX₂ₙ₊₂, wobei X Halogen und n 1-10, vorzugsweise 1-3, bedeuten) sind vorzugsweise in den Leerräumen von chlorhaltigen Siliciumkörnern vorhanden (physikalisch), können aber auch durch chemische Bindungen fest an Siliciumatome (Si-X) gebunden sein.

Der entsprechende Halogenidgehalt kann durch Titration mit Silbernitrat (nach Moor) quantitativ bestimmt werden. IRspektroskopische Messungen (ATR-Technik, Diamant Einfachreflexion) an chloridhaltigem Silicium zeigen ein Signal bei 1029 cm⁻¹. Die Stärke ist abhängig vom Halogenidgehalt und nimmt bei steigendem Halogenidgehalt zu.

Um eine gute Vermischung des halogenidhaltigen Siliciums mit dem aufzureinigenden metallurgischen Silicium zu erreichen, findet vorzugsweise granulares, insbesondere feinkörniges, halogenhaltiges Silicium Verwendung. Die Korngröße beträgt dabei zweckmäßigerweise 50 µm bis 20.000 µm. Das halogenidhaltige Silicium besitzt vorzugsweise eine Schüttdichte von 0,2 g/cm³ bis 1,5 g/cm³.

Der Halogenidgehalt ist von der Korngröße abhängig. Mit wachsender Korngröße steigt der Halogenidgehalt.

Eine weitere Variante des erfindungsgemäßen Verfahrens zeichnet sich dadurch aus, dass der Halogenidgehalt des zum Aufreinigen verwendeten halogenidhaltigen Siliciums durch eine Nachbehandlung eingestellt wird. Diese Nachbehandlung findet vorzugsweise unter Vakuum statt. Beispielsweise wurde der Chloridgehalt von chloridhaltigem Silicium einer bestimmten Sorte (Korngröße 50 µm bis 20.000 µm (ohne Sieben), Chloridgehalt 15 %) durch Ausheizen auf 1.150 °C über 4 Stunden bis auf einen Chloridgehalt von 4 % reduziert. Geeignete Nachbehandlungsverfahren sind beispielsweise Ausheizen, Ausheizen unter Vakuum, Zerkleinern oder Sieben.

Es hat sich gezeigt, dass erfindungsgemäß ohne aufwendige Einrichtungen zum Einleiten von Gas in die Schmelze gute Ergebnisse in Bezug auf die Aufreinigung von metallurgischem Silicium erzielt werden können. Hierbei konnten insbesondere Schwermetalle in der Form von Chloriden einwandfrei aus der Schmelze entfernt werden.

Bei einer weiteren Ausführungsform der erfindungsgemäßen Verwendung wird die Schmelze mit halogenidhaltigem Silicium nachgefüttert. Mit "Schmelze" ist hierbei die aus dem Gemisch aus halogenidhaltigem Silicium und zu reinigendem Silicium bestehende Schmelze oder die allein aus zu reinigendem Silicium bestehende Schmelze gemeint. In beiden Fällen kann durch das vorgenommene "Nachfüttern" der entsprechende Reinigungsprozess eingestellt werden, beispielsweise nachreguliert werden oder erneut begonnen werden.

Noch eine weitere Ausführungsform der erfindungsgemäßen Verwendung zeichnet sich dadurch aus, dass die Schmelze homogenisiert wird. Dies kann beispielsweise über eine Agitation der Schmelze erfolgen, insbesondere durch Tiegelrotation, Einsatz eines Rührwerkes etc. Die Schmelze kann jedoch auch allein dadurch homogenisiert werden, dass sie über eine ausreichende Zeit stehengelassen wird, so dass sich hierbei durch Konvektion eine geeignete Homogenisierung ergibt.

Die erfindungsgemäße Aufreinigung kann insbesondere bei Si-Kristallisationsverfahren eingesetzt werden, beispielsweise bei Blockgussverfahren, Czochralsky-Ver-fahren, EFG-Verfahren, String-Ribbon-Verfahren, RSG-Ver-fahren. Sie wird dabei zum Aufreinigen der Si-Schmelze verwendet, aus der die Kristalle erzeugt werden. Beim Blockgussverfahren werden multikristalline Si-Blöcke hergestellt, indem man durch kontrolliertes Erstarren Kristalle von bis zu mehreren Zentimetern Breite durch den ganzen Block wachsen lässt. Beim EFG-Verfahren (Edgedefined Film Growth) wird ein achteckiges "Rohr" aus der Siliciumschmelze gezogen. Das entstandene multikristalline Rohr wird an den Kanten zersägt und zu Wafern verarbeitet. Beim String-Ribbon-Verfahren wird zwischen zwei Drähten ein Band aus der Siliciumschmelze gezogen. Beim RGS-Verfahren (Ribbon Growth on Substrate) entsteht ein Band aus Silicium, indem ein Trägermaterial unter einem Tiegel mit flüssigem Silicium hinwegbewegt wird. Das Czochralsky-Verfahren ist ein Verfahren zur Herstellung von Silicium-Einkristallen, bei dem ein Kristall aus der Siliciumschmelze gezogen wird. Unter Zieh- und Drehbewegungen scheidet sich an einem Kristallisationskeim ein zylindrisches Silicium-Einkristall ab.

### Ausführungsbeispiel

Auf plasmachemische Weise hergestelltes halogeniertes Polysilan in der Form von PCS wurde kontinuierlich in einen Reaktor eingetropft, dessen Reaktionszone auf einem Druck von 300 mbar gehalten wurde. Die Temperatur der Reaktionszone wurde auf 450 °C gehalten. Vom Reaktor wurde kontinuierlich ein erhaltenes festes granulares Endprodukt abgezogen, bei dem es sich um Silicium mit einem Chloridgehalt von 33 at% handelte. Das erhaltene chloridhaltige Silicium besaß eine Schüttdichte von 1,15 g/cm³ und eine rote Farbe.

## Patentansprüche

1. Durch thermische Zersetzung von halogeniertem Polysilan erhaltenes halogenidhaltiges Silicium mit einem Halogenidgehalt von 1 at%-50 at%.

2. Halogenidhaltiges Silicium nach Anspruch 1,
**dadurch gekennzeichnet, dass**
es eine Schüttdichte von 0,2-1,5 g/cm³ besitzt.

3. Halogenidhaltiges Silicium nach einem der vorangehenden Ansprüche,
**dadurch gekennzeichnet, dass**
es eine Korngröße von 50-20.000 µm aufweist.

4. Halogenidhaltiges Silicium nach einem der vorangehenden Ansprüche,
**dadurch gekennzeichnet, dass**
es in den Leerräumen von halogenhaltigen Siliciumkörnern Halogensilane (SiₙX₂ₙ₊₂ (X = Halogen)) aufweist, wobei n = 1-10 ist.

5. Halogenidhaltiges Silicium nach einem der vorangehenden Ansprüche,
**dadurch gekennzeichnet, dass**
es chemisch fest an Si-Atome gebundenes Halogen aufweist und/oder Chlorid enthält.

6. Verfahren zur Herstellung des Siliciums nach einem der vorangehenden Ansprüche, bei dem das halogenierte Polysilan in einem Reaktor thermisch zersetzt wird, wobei das halogenierte Polysilan dem Reaktor kontinuierlich zugesetzt und halogenidhaltiges Silicium mit einem Halogengehalt von 1 at%-50 at% erhalten wird.

7. Verfahren nach Anspruch 6,
**dadurch gekennzeichnet, dass**
das halogenierte Polysilan in den Reaktor eingetropft wird.

8. Verfahren nach Anspruch 6 oder 7,
**dadurch gekennzeichnet, dass**
die thermische Zersetzung in einem Temperaturbereich von 350 °C - 1200 °C stattfindet und insbesondere die Temperatur zur Zersetzung des halogenierten Polysilans weniger als 400 °C beträgt.

9. Verfahren nach einem der Ansprüche 6 bis 8,
**dadurch gekennzeichnet, dass**
die thermische Zersetzung bei einem Druck von 10⁻³ mbar bis 300 mbar über Atmosphärendruck stattfindet.

10. Verfahren nach einem der Ansprüche 6 bis 9,
**dadurch gekennzeichnet, dass**
der Halogenidgehalt des erhaltenen halogenidhaltigen Siliciums durch Nachbehandlung desselben eingestellt wird.

11. Verwendung des halogenidhaltigen Silicium nach einem der Ansprüche 1 bis 5 zum Aufreinigen von metallurgischem Silicium mit den folgenden Schritten:
Vermischen von halogenidhaltigem Silicium mit dem zu reinigenden metallurgischen Silicium;
Schmelzen der Mischung und dadurch Aussublimieren der Verunreinigungen und Entfernen derselben aus der Schmelze in der Form von Metallhalogeniden.

12. Verwendung des halogenidhaltigen Siliciums nach einem der Ansprüche 1 bis 5 zum Aufreinigen von metallurgischem Silicium mit den folgenden Schritten:
Aufschmelzen des zu reinigenden metallurgischen Siliciums;
Einführen von halogenidhaltigem Silicium in die Schmelze und dadurch Aussublimieren der Verunreinigungen und Entfernen derselben aus der Schmelze in der Form von Metallhalogeniden.

13. Verwendung nach Anspruch 11 oder 12,
**dadurch gekennzeichnet, dass**
als halogenidhaltiges Silicium ein solches verwendet wird, das im Gemisch mit Si-Anteilen Halogensilan-Anteile enthält und oder das an Si-Atome chemisch gebundenes Halogen enthält.

14. Verwendung nach einem der Ansprüche 11 bis 13,
**dadurch gekennzeichnet, dass**
granulares, insbesondere feinkörniges, halogenidhaltiges Silicium verwendet wird.

15. Verwendung nach einem der Ansprüche 11 bis 14,
**dadurch gekennzeichnet, dass**
es bei Si-Kristallisationsverfahren, insbesondere Blockgussverfahren, Czochralsky-Verfahren, EFG-Verfahren, String-Ribbon-Verfahren, RSG-Verfahren, eingesetzt wird.

## Claims

1. Halide-containing silicon obtained by thermal decomposition of halogenated polysilane and having a halide content of 1 at% - 50 at%.

2. Halide-containing silicon according to claim 1, **characterized in that** it has a bulk density of 0.2 - 1.5 g/cm³.

3. Halide-containing silicon according to any of the preceding claims, **characterized in that** it has a grain size of 50 - 20000 µm.

4. Halide-containing silicon according to any of the preceding claims, **characterized in that** it comprises halosilanes (SiₙX₂ₙ₊₂ (X = halogen)) in the voids of halogen-containing silicon grains, where n = 1 - 10.

5. Halide-containing silicon according to any of the preceding claims, **characterized in that** it comprises halogen chemically fixedly bonded to Si atoms and/or contains chloride.

6. Method for producing the silicon according to any of the preceding claims, wherein the halogenated polysilane is thermally decomposed in a reactor, the halogenated polysilane being continuously added to the reactor and halide-containing silicon having a halide content of 1 at% - 50 at% being obtained.

7. Method according to claim 6, **characterized in that** the halogenated polysilane is introduced into the reactor dropwise.

8. Method according to claim 6 or 7, **characterized in that** the thermal decomposition takes place in a temperature range of 350°C - 1200°C and in particular the temperature for the decomposition of the halogenated polysilane is less than 400°C.

9. Method according to any of claims 6 to 8, **characterized in that** the thermal decomposition takes place at a pressure of 10⁻³ mbar to 300 mbar above atmospheric pressure.

10. Method according to any of claims 6 to 9, **characterized in that** the halide content of the halide-containing silicon obtained is set by aftertreatment of said halide-containing silicon.

11. Use of the halide-containing silicon according to any of claims 1 to 5, for purifying metallurgical silicon, comprising the following steps:
mixing halide-containing silicon with the metallurgical silicon to be purified;
melting the mixture and thereby sublimating out the impurities and removing the same from the melt in the form of metal halides.

12. Use of the halide-containing silicon according to any of claims 1 to 5 for purifying metallurgical silicon, comprising the following steps:
melting the metallurgical silicon to be purified;
introducing halide-containing silicon into the melt and thereby sublimating out the impurities and removing the same from the melt in the form of metal halides.

13. Use according to claim 11 or 12, **characterized in that** the halide-containing silicon used is halide-containing silicon which contains halosilane fractions mixed with Si fractions and/or which contains halogen chemically bonded to Si atoms.

14. Use according to any of claims 11 to 13, **characterized in that** granular, in particular fine-grained halide-containing silicon is used.

15. Use according to any of claims 11 to 14, **characterized in that** it is used in Si crystallization methods, in particular ingot casting methods, Czochralski methods, EFG methods, string ribbon methods, RSG methods.

## Revendications

1. Silicium contenant halogénure présentant une teneur en halogénure de 1% en atome-50% en atome, obtenu par décomposition thermique de polysilane halogéné.

2. Silicium contenant halogénure selon la revendication 1, **caractérisé en ce qu'**il présente une densité apparente de 0,2-1,5 g/cm³.

3. Silicium contenant halogénure selon l'une quelconque des revendications précédentes, **caractérisé en ce qu'**il présente une grosseur de particule de 50-20 000 µm.

4. Silicium contenant halogénure selon l'une quelconque des revendications précédentes, **caractérisé en ce qu'**il présente des halogénosilanes (SiₙX₂ₙ₊₂ (X = halogène)), n = 1-10, dans les espaces vides des particules de silicium contenant halogène.

5. Silicium contenant halogénure selon l'une quelconque des revendications précédentes, **caractérisé en ce qu'**il présente un halogène lié de manière chimiquement fixée aux atomes de Si et/ou contient du chlorure.

6. Procédé pour la préparation du silicium selon l'une quelconque des revendications précédentes, dans lequel le polysilane halogéné est décomposé thermiquement dans un réacteur, le polysilane halogéné étant ajouté en continu dans le réacteur et le silicium contenant halogénure étant obtenu avec une teneur en halogénure de 1% en atome-50% en atome.

7. Procédé selon la revendication 6, **caractérisé en ce que** le polysilane halogéné est introduit goutte à goutte dans le réacteur.

8. Procédé selon la revendication 6 ou 7, **caractérisé en ce que** la décomposition thermique a lieu dans une plage de température de 350°C-1200°C et la température pour la décomposition du polysilane halogéné est en particulier inférieure à 400°C.

9. Procédé selon l'une quelconque des revendications 6 à 8, **caractérisé en ce que** la décomposition thermique a lieu à une pression de 10⁻³ mbar à 300 mbar au-dessus de la pression atmosphérique.

10. Procédé selon l'une quelconque des revendications 6 à 9, **caractérisé en ce que** la teneur en halogénure du silicium contenant halogénure obtenu est réglée par post-traitement de celui-ci.

11. Utilisation du silicium contenant halogénure selon l'une quelconque des revendications 1 à 5 pour la purification de silicium métallurgique, présentant les étapes suivantes :
mélange du silicium contenant halogénure avec le silicium métallurgique à purifier ;
fusion du mélange et de ce fait élimination par sublimation des impuretés et évacuation de celles-ci de la masse fondue sous forme d'halogénures métalliques.

12. Utilisation du silicium contenant halogénure selon l'une quelconque des revendications 1 à 5 pour la purification de silicium métallurgique, présentant les étapes suivantes :
fusion du silicium métallurgique à purifier ;
introduction du silicium contenant halogénure dans la masse fondue et de ce fait élimination par sublimation des impuretés et évacuation de celles-ci de la masse fondue sous forme d'halogénures métalliques.

13. Utilisation selon la revendication 11 ou 12, **caractérisée en ce qu'**on utilise comme silicium contenant halogénure un silicium qui contient des proportions d'halogénosilane en mélange avec des proportions de Si et/ou qui contient un halogène lié chimiquement aux atomes de Si.

14. Utilisation selon l'une quelconque des revendications 11 à 13, **caractérisée en ce qu'**on utilise du silicium contenant halogénure granulaire, en particulier finement divisé.

15. Utilisation selon l'une quelconque des revendications 11 à 14, **caractérisée en ce qu'**il est utilisé dans des procédés de cristallisation de Si, en particulier le procédé de coulée en lingotière, le procédé de Czochralsky, le procédé EFG, le procédé String-Ribbon, le procédé RSG.
